# EUROPÄISCHE PATENTSCHRIFT

(11) **EP 1 899 629 B1**
(45) Veröffentlichungstag und Bekanntmachung des Hinweises auf die Patenterteilung: **19.12.2018**
(21) Anmeldenummer: 06776064.5
(22) Anmeldetag: 21.06.2006
(51) Int. Cl.: F16H 57/02, F16H 63/02, F16H 61/688, F16H 57/021, F16H 61/00

(54) **DOPPELKUPPLUNGSGETRIEBE FÜR EIN KRAFTFAHRZEUG**
TWIN-CLUTCH TRANSMISSION FOR A MOTOR VEHICLE
BOITE DE VITESSES A DOUBLE EMBRAYAGE POUR UN VEHICULE A MOTEUR

(30) Priorität: 28.06.2005 DE 102005029962
(43) Veröffentlichungstag der Anmeldung: 19.03.2008
(73) Patentinhaber: Volkswagen Aktiengesellschaft, 38440 Wolfsburg (DE)
(72) Erfinder: GRIFFITHS, Richard, G., Coventry CV4 9HZ (GB); KRUSE, Georg, 38518 Gifhorn (DE); HOFMANN, Rainer, 38350 Helmstedt (DE); ADOMEIT, Carsten, 30173 Hannover (DE); LUTZ, Wolf-Rüdiger, 38442 Wolfsburg (DE); ROBINSON, Robert, Coundon, Coventry CV6 1AB (GB); LIPMAN, John, Ettington, Stratford upon Avon CV37 7SY (GB); HOLDEN, Stuart, Southam CV47 1 PF (GB)
(86) Internationale Anmeldenummer: PCT/EP2006/005942
(87) Internationale Veröffentlichungsnummer: WO 2007/000269

(56) Entgegenhaltungen:
- EP-A1- 0 212 182
- EP-A1- 1 059 470
- WO-A-2005/037590
- GB-A- 1 142 506
- US-A- 4 653 352
- US-A- 5 966 989

## Beschreibung

Die Erfindung betrifft ein Doppelkupplungsgetriebe für ein Kraftfahrzeug mit einer ersten und einer zweiten Getriebeeingangswelle und mindestens einer Getriebeausgangswelle, wobei der ersten Getriebeeingangswelle bestimmte Gangstufen, vzw. die erste, dritte, fünfte und/oder siebte Gangstufe zugeordnet sind, und wobei der zweiten Getriebeeingangswelle bestimmte andere Gangstufen, vzw. die zweite, vierte und/oder sechste Gangstufe zugeordnet sind, und wobei ein im Wesentlichen innerhalb des Getriebegehäuses angeordnetes separates Aufnahmeelement vorgesehen ist.

Im Stand der Technik sind unterschiedlich ausgebildete Schaltgetriebe bekannt. Beispielsweise ist aus der DE 40 27 508 A1 ein Getriebe bekannt, bei dem ein als Lagertragrahmen ausgebildetes Aufnahmeelement vzw. innerhalb des Getriebes angeordnet ist. Hierbei weist das Aufnahmeelement eine konstruktiv sehr ausgestaltete und komplexe Form auf, da teilweise Ausnehmungen vorgesehen sind, in denen die Wellen des Getriebes hier teilweise innerhalb des Aufnahmeelementes gelagert werden.

So ist aus der DE 195 38 808 A1 eine Getriebebauart bekannt, bei der ebenfalls ein innerhalb des Getriebes angeordneter als Lagertragrahmen ausgebildetes Aufnahmeelement vorgesehen ist, dass wiederum konstruktiv sehr aufwendig gestaltet ist, wobei dieses Aufnahmeelement auch als "Trennwand" zur Realisierung möglicher unterschiedlicher Ölzustände in den einzelnen Getriebebereichen dient. Insbesondere die Anordnung der Steuerkomponenten für die hydraulische Steuerung zum Ein- und Ausrücken der Gangstufen, insbesondere zur Betätigung der Schaltschienen benötigt entsprechend großen Raumbedarf, der bei den bisher bekannten Getrieben auch zu unnötig großen Getriebegehäusen führt.

Aus der US 5,966,989 A1 ist ein gattungsgemäßes Doppelkupplungsgetriebe bekannt, bei dem innerhalb eines Getriebegehäuses eine separate Aufnahmeplatte vorgesehen ist, wobei eine der Getriebeeingangswellen und die Getriebeausgangswelle sich durch die Aufnahmeplatte hindurch erstrecken. Die sich nicht durch die Aufnahmeplatte erstreckende Getriebeeingangswelle und die Getriebeausgangswelle sind mit Hilfe der Aufnahmeplatte abgestützt.

Im Ergebnis sind die hier im Stand der Technik bekannten vzw. als Lagertragrahmen ausgebildeten Aufnahmeelemente noch nicht optimal ausgebildet, da diese einerseits konstruktiv sehr aufwendig sind, andererseits auch nur als vorgesehene Tragelemente verwendet werden, so dass das Getriebe an sich nicht sehr kompakt gebaut ist und der Wartungs- und Konstruktionsaufwand bzw. die damit einhergehenden Kosten erhöht sind.

Der Erfindung liegt daher die Aufgabe zugrunde, das zuvor genannte Doppelkupplungsgetriebe der eingangs genannten Art derart auszugestalten und weiterzubilden, dass einerseits eine kompakte Baueinheit erreicht ist, andererseits der Wartungsaufwand minimiert ist, wobei insbesondere die Lagerung der einzelnen Getriebewellen verbessert ist.

Die zuvor aufgezeigte Aufgabe ist nun dadurch gelöst, dass das Aufnahmeelement im wesentlichen als ein Aufnahmeblock zur Aufnahme und/oder Anordnung der Aktuatoren zur Betätigung der Schaltschienen ausgebildet ist. Vzw. zusätzlich - zu der oben genannten ersten Alternative - ist die Aufnahmeplatte nunmehr vzw. auch als Aufnahmeblock ausgebildet, so dass ein kompakter Steuerblock realisiert ist, der nicht nur die Getriebeeingangswellen bzw. die Getriebeausgangswelle lagert und/oder abstützt, sondern an dem auch die entsprechenden steuertechnischen Komponenten zur Betätigung der Aktuatoren, die Hochdruckventile angeordnet sowie die Hydraulikkanäle ausgebildet sind. Dies hat mehrere Vorteile. Einerseits ist eine kompakte Baueinheit des Getriebes möglich, wobei eine gute Lagerung der Getriebeeingangswellen der Getriebeausgangswelle realisiert ist, wesentlich ist aber nun auch zusätzlich realisiert, dass nunmehr ein kompakter Steuerblock geschaffen ist, in dem zugleich auch die Hydraulikkanäle ausgebildet sind. Dies hat zur Folge, dass weniger Leckagen auftreten können. Zugleich ist der Steuerblock so ausgebildet, dass entweder zumindest teilweise innerhalb des Steuerblockes oder aber direkt an dem Steuerblock die entsprechenden Aktuatoren und/oder Hochdruckventile entsprechend vorgesehen bzw. angeordnet sind, was wiederum das Ziel einer kompakten Getriebebaueinheit realisiert. Im Ergebnis ist eine Vielzahl von Vorteilen realisiert und die eingangs beschriebenen Nachteile sind vermieden.

Es gibt nun eine Vielzahl von Möglichkeiten das erfindungsgemäße Doppelkupplungsgetriebe in vorteilhafter Art und Weise auszugestalten und weiterzubilden. Hierfür darf zunächst auf die dem Patentanspruch 1 bzw. dem Patentanspruch 2 nachgeordneten Patentansprüche verwiesen werden. Im Folgenden soll nun ein bevorzugtes Ausführungsbeispiel der Erfindung anhand der nachfolgenden Zeichnung und der dazugehörenden Beschreibung näher erläutert werden. In der Zeichnung zeigt
- Fig. 1: in einer allgemeinen schematischen Darstellung die Anordnung des Aufnahmeelementes relativ zu den beiden Getriebeeingangswellen und der Getriebeausgangswelle,
- Fig. 2: in einer schematischen Darstellung teilweise geschnitten, das als Aufnahmeblock ausgebildete Aufnahmeelement,
- Fig. 3: das in Fig. 2 dargestellte Aufnahmeelement in einer schematischen Draufsicht,
- Fig. 4: das in Fig. 3 als Aufnahmeblock/kompakter Steuerblock ausgebildete Aufnahmeelement in schematischer Darstellung von der Seite,
- Fig. 5a-5c: in schematischer Darstellung teilweise in perspektivischer, teilweise in geschnittener Darstellung einen entsprechenden Aktuator mit darin angeordneten Kolbenelementen, und
- Fig. 5d und Fig. 5e: Details aus der Fig. 5c in vergrößerter schematischer Darstellung.

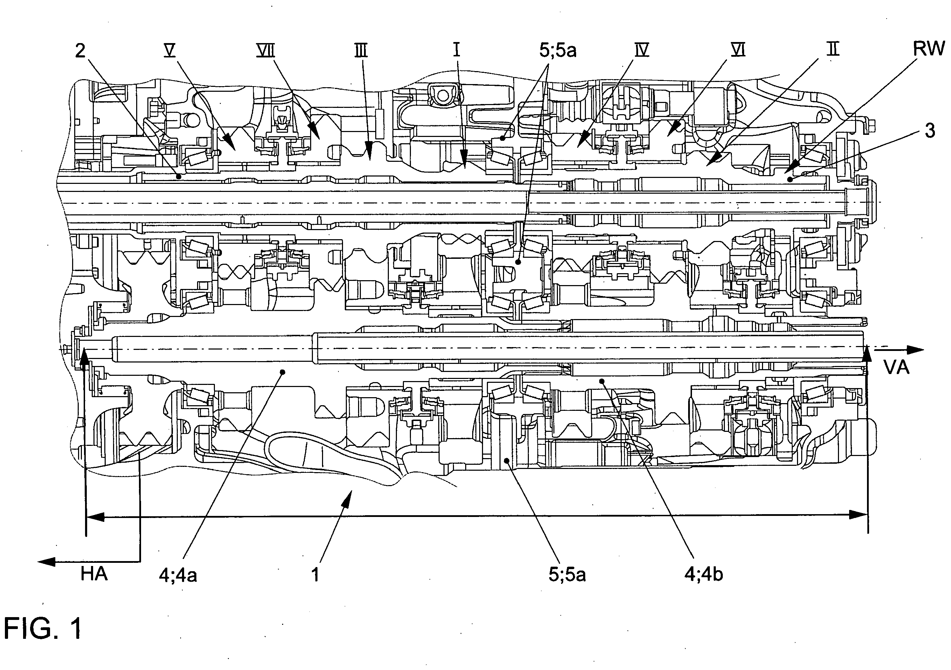

Die Fig. 1 bis 5 zeigen - zumindest teilweise - ein Doppelkupplungsgetriebe 1 für ein hier nicht näher dargestelltes Kraftfahrzeug.

Das Doppelkupplungsgetriebe 1 weist eine erste und zweite Getriebeeingangswelle 2 und 3 und eine Getriebeausgangswelle 4 auf.

Wie die Fig. 1 gut zeigt, sind der ersten Getriebeeingangswelle 2 bestimmte Gangstufen zugeordnet bzw. weist die erste Getriebeeingangswelle 2 hier die entsprechenden Zahnräder für die einzelnen Gangstufen auf. Dies sind hier die Zahnräder für die erste, die dritte, die fünfte und/oder die siebte Gangstufe I, III, V und/oder VII, so wie aus der Fig. 1 ersichtlich.

Die zweite Getriebeeingangswelle 3 weist hier die Zahnräder für die zweite, vierte und/oder sechste Gangstufe, II, IV und/oder VI auf.

Die Getriebeausgangswelle 4 ist hier auch im Wesentlichen durch eine erste Teil-Abtriebswelle 4a und eine zweite Teil-Abtriebswelle 4b gebildet. Vzw. ist die erste Teil-Abtriebswelle 4a mit der zweiten Teil-Abtriebswelle 4b drehfest miteinander verbunden.

Wie die Fig. 1 gut zeigt, weist die erste Teil-Abtriebswelle 4a die entsprechenden korrespondierenden Zahnräder zu den entsprechenden Gangstufen auf, die zu der ersten Getriebeeingangswelle 2 korrespondieren, wobei die zweite Teil-Abtriebswelle 4b die entsprechenden Zahnräder aufweist, die zu den Gangstufen der zweiten Getriebeeingangswelle 3 korrespondieren. Schließlich ist innerhalb des Getriebegehäuses ein separat angeordnetes Aufnahmeelement 5 vorgesehen. Der Übertragung der Drehmomente zur Hinterachse HA bzw. zur Vorderachse VA sind durch schematische Pfeile angedeutet.

Die eingangs beschriebenen Nachteile sind nun zunächst dadurch vermieden, dass das Aufnahmeelement 5 als eine Aufnahmeplatte oder als ein Aufnahmeblock 5a ausgebildet ist und die erste und zweite Getriebeeingangswelle 2 und 3 sowie auch die Getriebeausgangswelle 4 mit Hilfe des Aufnahmeelementes 5 innerhalb des Getriebegehäuses 1a lagerbar und/oder abstützbar sind und dass mindestens eine der Getriebeeingangswellen 2 bzw. 3 und die Getriebeausgangswelle 4 sich durch das Aufnahmeelement 5 hindurch erstreckt. Durch diese Art und Weise der Lagerung der Getriebeeingangswellen 2 und 3 bzw. der Getriebeausgangswelle 4 bzw. der Teil-Abtriebswellen 4a und 4b wird eine gute und optimale Lagerung der einzelnen Getriebewellen erzielt und es können zusätzliche Lagerelemente bzw. die zur Aufnahme der Lagerelemente in einem Getriebe üblicherweise Konstruktiv sehr aufwendig gestaltete Wandungen entfallen. Eine optimale Lagerung und/oder Abstützung der Getriebewellen ist durch das als Aufnahmeblock 5a ausgebildete Aufnahmeelement, so wie hier dargestellt gut realisiert. Damit ist eine kompakte Baueinheit des Doppelkupplungsgetriebes 1 erzielbar, so dass die eingangs genannten Nachteile vermieden sind.

Weiterhin sind die eingangs genannten Nachteile dadurch vermieden, dass das Aufnahmeelement 5 im wesentlichen als ein Aufnahmeblock 5a zur Aufnahme und/oder Anordnung der Aktuatoren 6 zur Betätigung der Schaltschienen 12 und/oder zur Aufnahme der Hydraulikkanäle 8 derart ausgebildet ist, so dass ein kompakter Steuerblock realisiert ist. Dadurch, dass nun die Aktuatoren 6 und/oder die Hydraulikkanäle 8 ebenfalls in dem Aufnahmeblock 5a mit aufgenommen werden, kann ein kompakter Steuerblock realisiert werden, so dass ebenfalls die sonst üblichen steuertechnischen Komponenten, wie separate Hydraulikleitungen, Dichtungen usw. zumindest teilweise entfallen können, da ein kompakter Steuerblock, nämlich der Aufnahmeblock 5a realisiert ist. Dadurch entfällt die sonst üblicherweise vorhandene Ölundichtigkeit, so dass die Leckageproblematik verringert ist, da die Hydraulikkanäle innerhalb des Steuerblockes, insbesondere in den Wandungen des Steuerblockes ausgebildet werden können. Durch die Aufnahme der Aktuatoren bzw. Kolbenelemente, was im folgenden noch näher erläutert werden wird und/oder der Hochdruckventile an dem Steuerblock ist eine kompakte hydraulische Steuerbetätigungseinheit geschaffen, die zusätzlich - wie bereits oben beschrieben - die Lagerung der jeweiligen Getriebeeingangswellen und Getriebeausgangswellen mit realisiert bzw. unterstützt.

Ein weiterer Vorteil ist, dass das Aufnahmeelement 5, vzw. also der Aufnahmeblock 5a aus einem anderen Werkstoff gefertigt werden kann als das Getriebegehäuse 1a. Bspw. kann dann das Aufnahmeelement 5 mit einem anderen Gussverfahren oder auch als Schmiedeteil hergestellt werden. Der Vorteil der sich hieraus ergibt, kann bspw. nicht nur ein spezifisches Bauteil sein, sondern auch ein spezifisches Bauteil, das den hohen Drücken/Kräften in einem Getriebe 1, also den durch die Getriebekomponenten erzeugten Kräften auch unter hohem Druck gut stand hält.

Wie die Fig. 1 zeigt ist das Aufnahmeelement 5, also hier der Aufnahmeblock 5a im Wesentlichen im mittleren Bereich des Getriebegehäuses 1a angeordnet. Es ist gut zu erkennen, wie sich die zweite Getriebeeingangswelle 3 und auch die Getriebeausgangswelle 4 durch entsprechende Ausnehmungen durch den Aufnahmeblock 5a von der einen Seite zur anderen Seite des Getriebegehäuses 1a erstrecken. Vzw. ist das Aufnahmeelement 5 bzw. der Aufnahmeblock 5a so ausgebildet, dass dieser im Wesentlichen zwischen mindestens zwei sich gegenüberliegenden Wandungen des Getriebegehäuses 1a angeordnet ist. Durch den Aufnahmeblock 5a ist das Getriebegehäuse 1a in zwei Bereiche entsprechend unterteilt bzw. getrennt. Gut zu erkennen ist die entsprechende Lagerung der ersten und zweiten Getriebeeingangswelle 2 und 3 und der Getriebeausgangswelle 4 bzw. der Teil-Abtriebswellen 4a und 4b innerhalb des Aufnahmeblockes 5a durch teilweise hier nicht näher bezeichnete Lagerelemente.

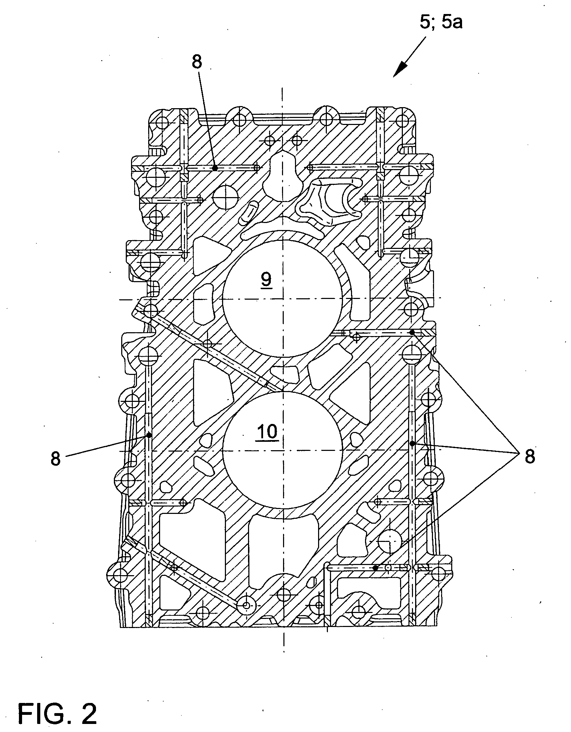

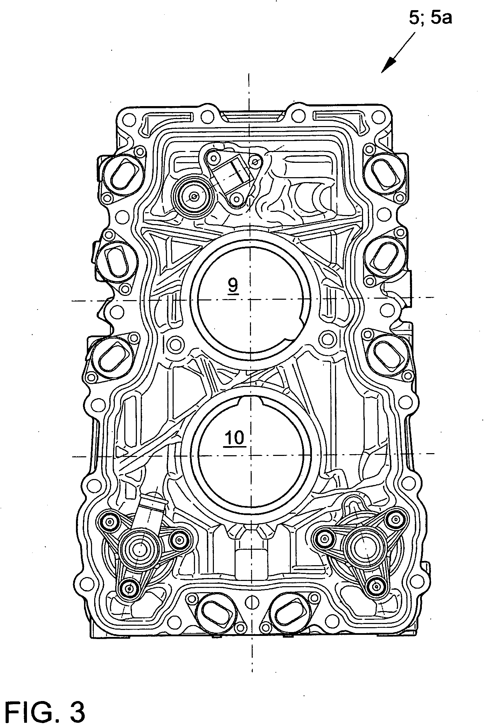

Die Fig. 2 und 3 zeigen die entsprechenden Ausnehmungen 9 und 10, durch die sich die entsprechenden Getriebeeingangswelle 2 bzw. 3 bzw. die Getriebeausgangswelle 4 erstreckt bzw. in dem Aufnahmeblock 5a gelagert werden. Gut ersichtlich in der Fig. 2 sind auch die hier dargestellten Hydraulikkanäle 8. Die Hydraulikkanäle 8 sind vzw. im Vollmaterial des Aufnahmeblockes 5a entsprechend ausgebildet, so dass hier keine Undichtigkeiten durch separate anzuordnende Druckmittelleitungen entstehen können, was von besonderem Vorteil ist.

Wie bereits erwähnt liegen sich die entsprechenden Gangstufenbereiche der jeweiligen Wellen im wesentlichen gegenüber, d. h. der Gangstufenbereich der ersten Getriebeeingangswelle 2 liegt dem Gangstufenbereich der ersten Teil-Abtriebswelle 4a im wesentlichen gegenüber, so dass die entsprechenden Zahnräder der einzelnen Gangstufen hier ineinander greifen können. Gleiches gilt für den Gangstufenbereich der zweiten Getriebeeingangswelle 3 bzw. der zweiten Teil-Abtriebswelle 4b, wobei die Gangstufenbereiche hier ebenfalls gegenüberliegend angeordnet sind, so dass die Zahnräder hier ineinander greifen können. Das jeweilige dem Aufnahmeelement 5 zugewandte Ende der ersten und zweiten Getriebeeingangswelle 2 und 3 sowie das jeweilige dem Aufnahmeelement 5 zugewandte Ende der ersten und zweiten Teil-Abtriebswelle 4a bzw. 4b sind im Wesentlichen innerhalb des Aufnahmeelements 5 gelagert, was ebenfalls gut ersichtlich ist.

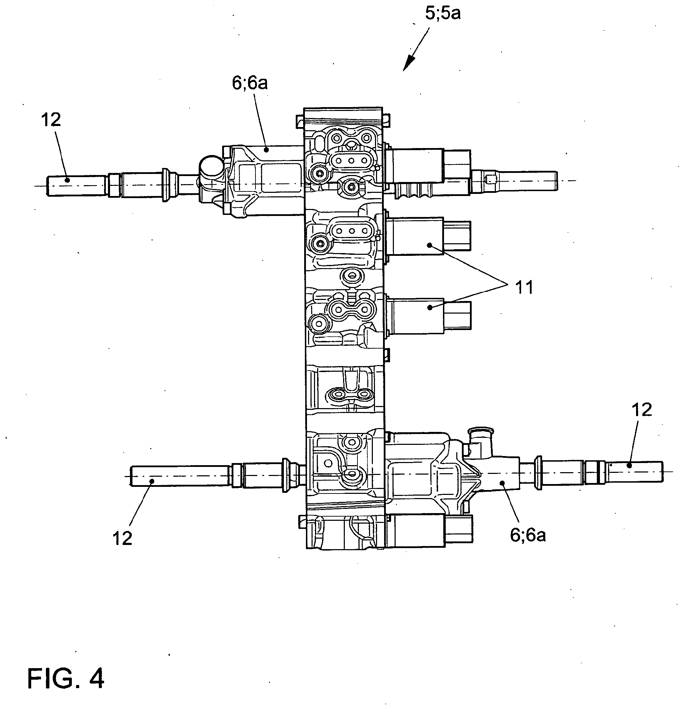

Die Fig. 3 bzw. die Fig. 4 zeigt hydraulische Hochdruckventile 11 zur Ansteuerung der Aktuatoren 6, die an dem Aufnahmeelement 5, nämlich an dem Aufnahmeblock 5a angeordnet sind. Gut ersichtlich sind die Aktuatoren 6 und die von den Aktuatoren 6 betätigten Schaltschienen 12. Wie bereits erläutert sind die zwischen den Hochdruckventilen 11 und den Aktuatoren 6 vorgesehenen Hydraulikkanäle 8 im Wesentlichen vollständig innerhalb des Aufnahmeelementes 5, nämlich im Aufnahmeblock 5a ausgebildet. Die Fig. 4 zeigt gut ersichtlich die Hochdruckventile 11, die Schaltschienen 12, die von den Aktuatoren 6 bedient werden bzw. die Aktuatorengehäuse 6a der Aktuatoren 6. Bei den Darstellungen in den Fig. 3 und 4 bzw. auch in der Fig. 2 sind die Getriebeeingangswellen 2 und 3 bzw. die Getriebeausgangswellen 4 nicht dargestellt.

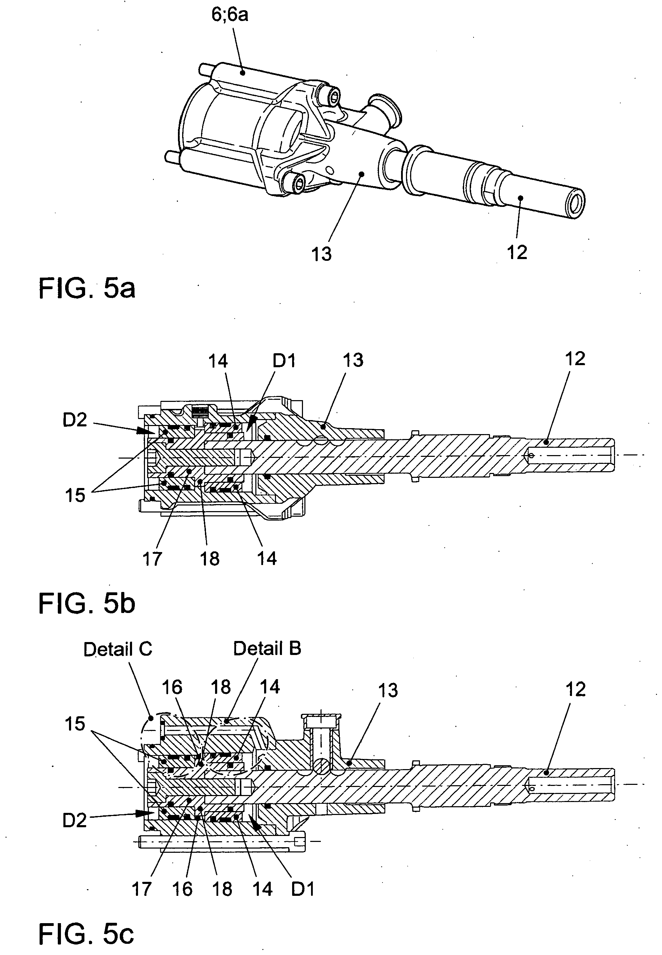

Die Fig. 5a bis 5c zeigen nun einen Aktuator 6 bzw. das Aktuatorgehäuse 6a eines Aktuators 6 und die Schaltschiene 12, die über nicht dargestellte Schiebemuffen das Ein- bzw. Ausrücken der einzelnen Gangstufen realisiert. Dargestellt ist also der "innere Aufbau" der jeweiligen hier verwendeten Aktuatoren 6, so dass das Zusammenwirken mit den Schaltschienen 12 gut ersichtlich ist.

Im Aktuatorgehäuse 6a des Aktuators 6 wird die Schaltschiene 12 entsprechend geführt bzw. bewegt, wobei diese über ein vorderes Gehäuseteil 13 zunächst gelagert ist. Im Inneren des Aktuatorgehäuses 6a ist ein erstes und zweites Kolbenelement 14 und 15 geführt. Das Aktuatorgehäuse 6a weist innen einen Bund 16 auf, der vzw. entlang des Innenumfanges vorgesehen ist und der die Bewegungen der jeweiligen Kolbenelemente 14 und 15 in eine bestimmte Richtung entsprechend innerhalb des Aktuatorgehäuses 6a begrenzt. So wird die Bewegung des ersten Kolbenelementes 14 durch den Bund 16 nach links begrenzt und die Bewegung des zweiten Kolbenelementes 15 durch den Bund 16 nach rechts begrenzt. Die Schaltschiene 12 ist nun durch das erste bzw. das zweite Kolbenelement 14 und 15 in eine bestimmte jeweilige Richtung bewegbar. Vzw. ist an der Schaltschiene 12 als separater oder auch integraler Bestandteil ein Abschlusselement 17 vorgesehen. Für den Fall, wie hier dargestellt, dass das Abschlusselement 17 als separater Bestandteil ausgeführt ist, wird dies vzw. über eine nicht näher bezeichnete Schraube mit der Schaltschiene 12 wirksam verbunden. Die äußeren Flächen des Abschlusselementes 17 stehen in direktem Kontakt mit dem ersten und zweiten Kolbenelement 14 und 15, so dass eine entsprechende Führung gewährleistet ist. Das Abschlusselement 17 weist vzw. einen nach außen ragenden Fortsatz 18 auf, so dass - zumindest zeitweise - eine dem Bund 16 zugewandte Endfläche der beiden Kolbenelemente 14 bzw. 15 auch mit dem Fortsatz 18 in Kontakt bringbar ist.

Zur Beaufschlagung der jeweiligen Endflächen der Kolbenelemente 14 bzw. 15 sind nun Druckkammern D1 bzw. D2 vorgesehen. Die Druckkammern D1 bzw. D2 können über Hydraulikkanäle 8 entsprechend druckbeaufschlagt werden. Die den beiden Druckkammern D1 bzw. D2 zugewandten Endflächen der beiden Kolbenelemente 14 bzw. 15 und/oder die den Druckkammern D1 bzw. D2 zugewandten Endflächen des Abschlusselementes 17 sind nun derart dimensioniert bzw. ausgebildet, so dass bei einer Druckbeaufschlagung der Druckkammern D1 bzw. D2 mit dem gleichen Druck die beiden Kolbenelemente 14 bzw. 15 in eine sich selbst zentrierende Stellung bringbar sind. Dieser Ablauf soll im Folgenden noch einmal näher erläutert werden:

Bei den Fig. 5b bzw. 5c sind die beiden Kolbenelemente 14 und 15 in der bereits sich selbst zentrierenden Lage, also in der Neutralstellung dargestellt. Hierbei stößt die linke Endfläche des ersten Kolbenelementes 14 bzw. die rechte Endfläche des zweiten Kolbenelementes 15 an den Bund 16 bzw. den Fortsatz 18 an. Das Abschlusselement 17 ist zusammen mit der Schaltschiene 12 entsprechend bewegbar. Wird nun in der hier dargestellten Stellung beispielsweise die Druckkammer D1 mit einem hohen Druck beaufschlagt, so verschiebt sich das Abschlusselement 17 bzw. das zweite Kolbenelement 15 nach links. Wird nun die Druckkammer D2 mit dem gleichen Druck beaufschlagt wie die Druckkammer D1 so wird aufgrund der Dimensionierung der Endflächen der jeweiligen Kolbenelemente 14 bzw. 15 und der Endflächen des Abschlusselementes 17 eine Bewegung in die Neutrallage verursacht, also das zweite Kolbenelement 15 bzw. das Abschlusselement 17 bewegt sich wieder so weit nach rechts und damit auch die Schaltschiene 12 bis das zweite Kolbenelement 15 ebenfalls zum Anschlag kommt an dem Bund 16 bzw. der Fortsatz 18 zum Anschlag kommt an dem ersten Kolbenelement 14.

Durch das hier dargestellte und realisierte System der "sich selbstzentrierenden Kolbenelemente 14 bzw. 15 ist daher nicht nur eine kompakte Baueinheit geschaffen, sondern auch im Notfallbetrieb des Kraftfahrzeug kann, wenn beide Druckräume D1 bzw. D2 mit dem gleichen Druck beaufschlagt werden die entsprechende Schaltschiene 12 in die entsprechende Neutrallage gebracht werden und damit ein entsprechender Getriebegang bzw. eine Gangstufe kann ausgerückt werden.

So sind nicht nur mit Hilfe des Aufnahmeblockes 5a, also des kompakten Steuerblockes mehrere Vorteile realisiert, nämlich einerseits die gute Führung/Lagerung der Getriebeeingangswellen 2 und 3 bzw. der Getriebeausgangswelle 4, sondern es ist auch eine große Öldichtigkeit gewährleistet, so dass die entsprechenden Leckagen vermindert sind. Auch sind die hier dargestellten Kolbenelemente 14 bzw. 15 der jeweiligen Aktuatoren 6 innerhalb des Aufnahmeblockes 5a gelagert, so dass insgesamt auch die Toleranzkette verkürzt ist. Insbesondere auch aufgrund der spezifischen geometrischen Lagerung des Aufnahmeblockes 5a, als "Centerplatte" mittig im Getriebegehäuse 1a ist die Toleranzkette zu den entsprechenden Lagern der jeweiligen Wellen entsprechend verkürzt, da insbesondere thermische Ausdehnungen jeweils gleichmäßig auf alle Schaltschienen 12 wirken können und hier dann die gleichen Auswirkungen haben. Durch die Verkürzung der Hydraulikwege verkürzt sich die Toleranzkette und ist die hydraulische Ansteuerung entsprechend verbessert, wobei aufgrund der Anordnung, insbesondere der mittigen Anordnung des Aufnahmeblockes 5a auch ein thermischer Längenausgleich in beide Richtungen erfolgen kann, was wiederum die hydraulische Ansteuerung vereinfacht bzw. präzisiert. Vzw. sind in dem Aufnahmeblock 5a alle für die Steuerung notwendigen Hochdruckventile 11 anordenbar bzw. die Aktuatoren 6 zumindest teilweise direkt an oder in dem Aufnahmeblock ausgebildet, so dass eine kompakte Steuereinheit realisiert ist.

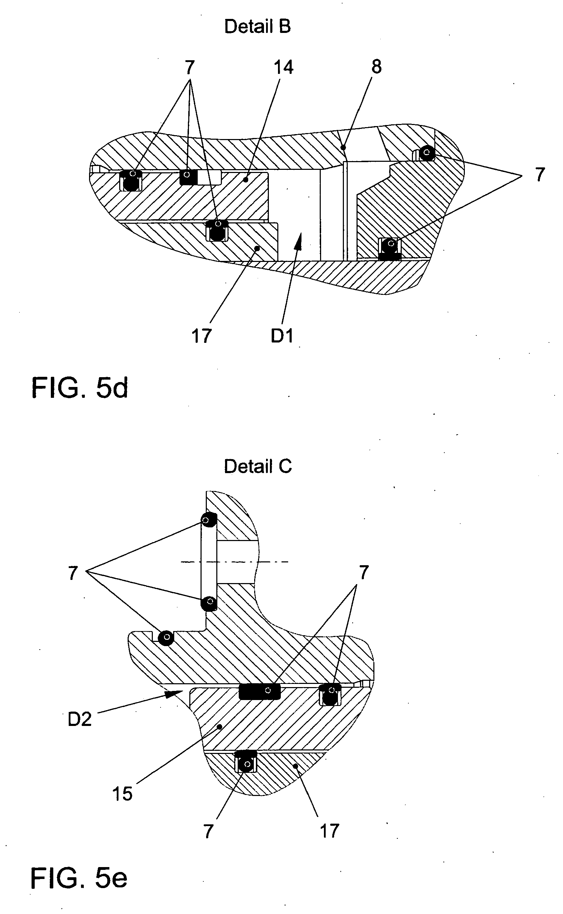

Schließlich zeigen die Fig. 5d und 5e nochmals Details der Fig. 5c mit der entsprechenden Anordnung der Dichtungselemente 7.

Im Ergebnis sind mit den hier dargestellten Merkmalen eine kompakte Getriebeeinheit realisiert und entscheidende Vorteile erzielt.

### Bezugszeichenliste

- 1: Doppelkupplungsgetriebe
- 1a: Getriebegehäuse
- 2: erste Getriebeeingangswelle
- 3: zweite Getriebeeingangswelle
- 4: Getriebeausgangswelle
- 4a: erste Teil-Abtriebswelle
- 4b: zweite Teil-Abtriebswelle
- 5: Aufnahmeelement
- 5a: Aufnahmeblock
- 6: Aktuatoren
- 6a: Aktuatorgehäuse
- 7: Dichtungselemente
- 8: Hydraulikkanäle
- 9: Ausnehmung
- 10: Ausnehmung
- 11: Hochdruckventil
- 12: Schaltschienen
- 13: vorderes Gehäuseteil
- 14: erstes Kolbenelement
- 15: zweites Kolbenelement
- 16: Bund
- 17: Abschlusselement
- 18: Fortsatz
- D1: Druckkammer
- D2: Druckkammer
- I: 1. Gangstufe
- II: 2. Gangstufe
- III: 3. Gangstufe
- IV: 4. Gangstufe
- V: 5. Gangstufe
- VI: 6. Gangstufe
- VII: 7. Gangstufe

## Patentansprüche

1. Doppelkupplungsgetriebe (1) für ein Kraftfahrzeug , mit einer ersten und einer zweiten Getriebeeingangswelle (2, 3) und mindestens einer Getriebeausgangswelle (4), wobei der ersten Getriebeeingangswelle (2) bestimmte Gangstufen, vzw. die erste (I), dritte (III), fünfte (V) und/oder siebte (VII) Gangstufe zugeordnet sind, und wobei der zweiten Getriebeeingangswelle (3) bestimmte andere Gangstufen, vzw. die zweite (II), vierte (IV) und/oder sechste (VI) Gangstufe zugeordnet sind, und wobei ein im Wesentlichen innerhalb des Getriebegehäuses (1a) angeordnetes separates Aufnahmeelement (5) vorgesehen ist, wobei die erste und zweite Getriebeeingangswelle (2, 3) sowie auch die Getriebeausgangswelle (4) mit Hilfe des Aufnahmeelementes (5) innerhalb des Getriebegehäuses (1a) lagerbar und/oder abstützbar sind und dass mindestens eine der Getriebeeingangswellen (2, 3) und die Getriebeausgangswelle (4) sich durch das Aufnahmeelement (5) hindurch erstreckt **dadurch gekennzeichnet, dass** das Aufnahmeelement (5) im wesentlichen als ein Aufnahmeblock (5a) zur Aufnahme und/oder Anordnung der Aktuatoren (6) zur Betätigung der Schaltschienen (12)ausgebildet ist.

2. Doppelkupplungsgetriebe nach Anspruch 1, **dadurch gekennzeichnet, dass** das Aufnahmeelement (5) zur Aufnahme von Hydraulikkanälen (8) derart ausgebildet ist, so dass ein kompakter Steuerblock realisiert ist.

3. Doppelkupplungsgetriebe nach einem der vorstehenden Ansprüche, **dadurch gekennzeichnet, dass** das Aufnahmeelement (5) im Wesentlichen im mittleren Bereich des Getriebegehäuses (1a) angeordnet ist.

4. Doppelkupplungsgetriebe nach einem der vorstehenden Ansprüche, **dadurch gekennzeichnet, dass** das Aufnahmeelement (5) im Wesentlichen zwischen mindestens zwei sich gegenüberliegenden Wandungen des Getriebegehäuses (1a) angeordnet ist.

5. Doppelkupplungsgetriebe nach einem der vorstehenden Ansprüche, **dadurch gekennzeichnet, dass** durch das Aufnahmeelement (5) das Getriebegehäuse (1a) in zwei Bereiche unterteilt ist.

6. Doppelkupplungsgetriebe nach einem der vorstehenden Ansprüche, **dadurch gekennzeichnet, dass** die Getriebeausgangswelle (4) durch eine erste Teil-Abtriebswelle (4a) und durch eine zweite Teil-Abtriebswelle (4b) gebildet ist und dass die erste und die zweite Teil-Abtriebswelle (4a, 4b) drehfest miteinander verbunden sind.

7. Doppelkupplungsgetriebe nach einem der vorstehenden Ansprüche, **dadurch gekennzeichnet, dass** die erste Getriebeeingangswelle (2) und die erste Teil-Abtriebswelle (4a) bzw. der entsprechende Gangstufenbereich der jeweiligen Wellen im Wesentlichen gegenüberliegend angeordnet sind.

8. Doppelkupplungsgetriebe nach einem der vorstehenden Ansprüche, **dadurch gekennzeichnet, dass** die zweite Getriebeeingangswelle (3) und die zweite Teil-Abtriebswelle (4b) bzw. der entsprechende Gangstufenbereich der jeweiligen Wellen im Wesentlichen gegenüberliegend angeordnet sind.

9. Doppelkupplungsgetriebe nach einem der vorstehenden Ansprüche, **dadurch gekennzeichnet, dass** die sich durch das Aufnahmeelement hindurch erstreckende zweite Getriebeeingangswelle durch zwei Teilwellen gebildet ist, wobei diese Teilwellen drehfest miteinander verbunden sind, das jeweilige dem Aufnahmeelement (5) zugewandte Ende der ersten Getriebeeingangswelle (2) und einer der Teilwellen der zweiten Getriebeeingangswelle, sowie das jeweilige dem Aufnahmeelement (5) zugewandte Ende der ersten und zweiten Teil-Abtriebswelle (4a, 4b) im wesentlichen innerhalb des Aufnahmeelementes (5) gelagert sind.

10. Doppelkupplungsgetriebe nach einem der vorstehenden Ansprüche, **dadurch gekennzeichnet, dass** die hydraulischen Hochdruckventile (11) zur Ansteuerung der Aktuatoren (6) an dem Aufnahmeelement (5) angeordnet sind.

11. Doppelkupplungsgetriebe nach einem der vorstehenden Ansprüche, **dadurch gekennzeichnet, dass** die die Schaltschienen (12) betätigenden Aktuatoren (6) an und/oder im Aufnahmeelement (5) angeordnet sind.

12. Doppelkupplungsgetriebe nach einem der vorstehenden Ansprüche, **dadurch gekennzeichnet, dass** die zwischen den Hochdruckventilen (11) und den Aktuatoren (6) vorgesehen Hydraulikkanäle (8) im wesentlichen vollständig innerhalb des Aufnahmeelementes (5) ausgebildet sind.

13. Doppelkupplungsgetriebe nach einem der vorstehenden Ansprüche, **dadurch gekennzeichnet, dass** mindestens ein Aktuator (6) ein im Aktuatorgehäuse (6a) geführtes erstes und zweites Kolbenelement (14, 15) aufweist.

14. Doppelkupplungsgetriebe nach einem der vorstehenden Ansprüche, **dadurch gekennzeichnet, dass** das Aktuatorgehäuse (6a) einen zwischen den Kolbenelementen (14, 15) vorgesehen, die Bewegung der jeweiligen Kolbenelemente (14, 15) in eine jeweilige Richtung begrenzenden innenliegenden Bund (16) aufweist.

15. Doppelkupplungsgetriebe nach einem der vorstehenden Ansprüche, **dadurch gekennzeichnet, dass** durch das erste und das zweite Kolbenelement (14, 15) die Schaltschiene (12) in eine bestimmte jeweilige Richtung bewegbar ist.

16. Doppelkupplungsgetriebe nach einem der vorstehenden Ansprüche, **dadurch gekennzeichnet, dass** an der Schaltschiene (12) als separater oder integraler Bestandteil ein Abschlusselement (17) vorgesehen ist, das mit den Umfangsflächen des ersten und zweiten Kolbenelementes (14, 15) für eine entsprechende Führung in Kontakt steht.

17. Doppelkupplungsgetriebe nach einem der vorstehenden Ansprüche, **dadurch gekennzeichnet, dass** das Abschlusselement (17) einen nach außen ragenden Fortsatz (18) aufweist, so dass - zumindest zeitweise - eine dem Bund (16) zugewandte Endfläche der beiden Kolbenelemente (14, 15) mit dem Fortsatz (18) in Kontakt bringbar ist.

18. Doppelkupplungsgetriebe nach einem der vorstehenden Ansprüche, **dadurch gekennzeichnet, dass** zur Beaufschlagung jeweils einer der Endflächen der Kolbenelemente (14, 15) Druckkammern (D1, D2) vorgesehen sind.

19. Doppelkupplungsgetriebe nach einem der vorstehenden Ansprüche, **dadurch gekennzeichnet, dass** die Druckkammern (D1, D2) mit Hydraulikkanälen (8) strömungsverbunden sind.

20. Doppelkupplungsgetriebe nach einem der vorstehenden Ansprüche, **dadurch gekennzeichnet, dass** die den beiden Druckkammern (D1, D2) zugewandten Endflächen der beiden Kolbenelemente (14, 15) und/oder die die den Druckkammern (D1, D2) zugewandten Endflächen des Abschlusselementes (17) derart dimensioniert und/oder ausgebildet sind, so dass bei einer Druckbeaufschlagung der Druckkammern (D1, D2) mit dem gleichen oder ähnlichem Druck die beiden Kolbenelemente (14, 15) in eine sich selbst zentrierende Stellung bringbar sind.

## Claims

1. Dual-clutch transmission (1) for a motor vehicle, having a first and a second transmission input shaft (2, 3) and having at least one transmission output shaft (4), wherein the first transmission input shaft (2) is assigned particular gear stages, preferably the first (I), third (III), fifth (V), and/or seventh (VII) gear stage, and wherein the second transmission input shaft (3) is assigned particular other gear stages, preferably the second (II), fourth (IV), and/or sixth (VI) gear stage, and wherein a separate receiving element (5) is provided which is arranged substantially within the transmission housing (1a), wherein the first and second transmission input shaft (2, 3) and the transmission output shaft (4) can be mounted and/or supported within the transmission housing (1a) by means of the receiving element (5), and in that at least one of the transmission input shafts (2, 3) and the transmission output shaft (4) extends through the receiving element (5), **characterized in that** the receiving element (5) is formed substantially as a receiving block (5a) for receiving and/or for the arrangement of the actuators (6) for the actuation of the shift rails (12) .

2. Dual-clutch transmission according to Claim 1, **characterized in that** the receiving element (5) is designed for receiving hydraulic channels (8) such that a compact control block can be realized.

3. Dual-clutch transmission according to one of the preceding claims, **characterized in that** the receiving element (5) is arranged substantially in the central region of the transmission housing (1a).

4. Dual-clutch transmission according to one of the preceding claims, **characterized in that** the receiving element (5) is arranged substantially between at least two opposite walls of the transmission housing (1a).

5. Dual-clutch transmission according to one of the preceding claims, **characterized in that** the transmission housing (1a) is divided into two regions by the receiving element (5).

6. Dual-clutch transmission according to one of the preceding claims, **characterized in that** the transmission output shaft (4) is formed by a first partial output shaft (4a) and a second partial output shaft (4b), and **in that** the first and the second partial output shaft (4a, 4b) are connected rotationally conjointly to one another.

7. Dual-clutch transmission according to one of the preceding claims, **characterized in that** the first transmission input shaft (2) and the first partial output shaft (4a), or the corresponding gear stage region of the respective shafts, are arranged substantially oppositely.

8. Dual-clutch transmission according to one of the preceding claims, **characterized in that** the second transmission input shaft (3) and the second partial output shaft (4b), or the corresponding gear stage region of the respective shafts, are arranged substantially oppositely.

9. Dual-clutch transmission according to one of the preceding claims, **characterized in that** the second transmission input shaft which extends through the receiving element is formed by two partial shafts, wherein said partial shafts are connected rotationally conjointly to one another, the respective end, facing toward the receiving element (5), of the first transmission input shaft (2) and of one of the partial shafts of the second transmission input shaft, and the respective end, facing toward the receiving element (5), of the first and second partial output shaft (4a, 4b), are mounted substantially within the receiving element (5) .

10. Dual-clutch transmission according to one of the preceding claims, **characterized in that** the hydraulic high-pressure valves (11) for the activation of the actuators (6) are arranged on the receiving element (5).

11. Dual-clutch transmission according to one of the preceding claims, **characterized in that** the actuators (6) which actuate the shift rails (12) are arranged on and/or in the receiving element (5).

12. Dual-clutch transmission according to one of the preceding claims, **characterized in that** the hydraulic channels (8) provided between the high-pressure valves (11) and the actuators (6) are formed substantially entirely within the receiving element (5).

13. Dual-clutch transmission according to one of the preceding claims, **characterized in that** at least one actuator (6) has a first and second piston element (14, 15) guided in the actuator housing (6a).

14. Dual-clutch transmission according to one of the preceding claims, **characterized in that** the actuator housing (6a) has an internally situated collar (16) which is provided between the piston elements (14, 15) and which limits the movement of the respective piston elements (14, 15) in a respective direction.

15. Dual-clutch transmission according to one of the preceding claims, **characterized in that** the shift rail (12) is movable in a particular respective direction by means of the first and the second piston element (14, 15).

16. Dual-clutch transmission according to one of the preceding claims, **characterized in that** a terminating element (17) is provided, as a separate or integral constituent part, on the shift rail (12), which terminating element is, for corresponding guidance, in contact with the circumferential surfaces of the first and second piston element (14, 15).

17. Dual-clutch transmission according to one of the preceding claims, **characterized in that** the terminating element (17) has a radially outwardly projecting protrusion (18) such that - at least intermittently - an end surface, facing toward the collar (16), of the two piston elements (14, 15) can be placed in contact with the protrusion (18).

18. Dual-clutch transmission according to one of the preceding claims, **characterized in that** pressure chambers (D1, D2) are provided for the exertion of load on in each case one of the end surfaces of the piston elements (14, 15).

19. Dual-clutch transmission according to one of the preceding claims, **characterized in that** the pressure chambers (D1, D2) are fluidically connected to hydraulic channels (8).

20. Dual-clutch transmission according to one of the preceding claims, **characterized in that** the end surfaces, facing toward the two pressure chambers (D1, D2), of the two piston elements (14, 15) and/or the end surfaces, facing toward the pressure chambers (D1, D2), of the terminating element (17) are dimensioned and/or designed such that, when the pressure chambers (D1, D2) are pressurized with the same or a similar pressure, the two piston elements (14, 15) can be brought into a self-centring position.

## Revendications

1. Boîte de vitesses à double embrayage (1) pour un véhicule à moteur, comprenant un premier et un deuxième arbre d'entrée de boîte de vitesses (2, 3) et au moins un arbre de sortie de boîte de vitesses (4), des rapports de vitesse définis, de préférence le premier (I), le troisième (III), le cinquième (V) et/ou le septième (VII) rapport de vitesse, étant associés au premier arbre d'entrée de boîte de vitesses (2), et d'autres rapport de vitesse définis, de préférence le deuxième (II), le quatrième (IV) et/ou le sixième (VI) rapport de vitesse étant associés au deuxième arbre d'entrée de boîte de vitesses (3), et un élément de réception (5) séparé disposé sensiblement à l'intérieur du carter de boîte de vitesses (1a) étant prévu, le premier et le deuxième arbre d'entrée de boîte de vitesses (2, 3) ainsi qu'également l'arbre de sortie de boîte de vitesses (4) pouvant être montés et/ou supportés à l'intérieur du carter de boîte de vitesses (1a) à l'aide de l'élément de réception (5), et en ce que au moins l'un des arbres d'entrée de boîte de vitesses (2, 3) et l'arbre de sortie de boîte de vitesses (4) s'étendant à travers l'élément de réception (5), **caractérisée en ce que** l'élément de réception (5) est formé sensiblement en tant que bloc de réception (5a) servant à recevoir et/ou à disposer les actionneurs (6) servant à actionner les tiges de changement de vitesses (12).

2. Boîte de vitesses à double embrayage selon la revendication 1, **caractérisée en ce que** l'élément de réception (5) servant à recevoir des conduites hydrauliques (8) est formé de manière à réaliser un bloc de commande compact.

3. Boîte de vitesses à double embrayage selon l'une quelconque des revendications précédentes, **caractérisée en ce que** l'élément de réception (5) est disposé sensiblement dans la région centrale du carter de boîte de vitesses (1a).

4. Boîte de vitesses à double embrayage selon l'une quelconque des revendications précédentes, **caractérisée en ce que** l'élément de réception (5) est disposé sensiblement entre au moins deux parois en regard du carter de boîte de vitesses (1a).

5. Boîte de vitesses à double embrayage selon l'une quelconque des revendications précédentes, **caractérisée en ce que** le carter de boîte de vitesses (1a) est divisé en deux régions par l'élément de réception (5).

6. Boîte de vitesses à double embrayage selon l'une quelconque des revendications précédentes, **caractérisée en ce que** l'arbre de sortie de boîte de vitesses (4) est formé par un premier arbre de sortie partiel (4a) et par un deuxième arbre de sortie partiel (4b), et **en ce que** le premier et le deuxième arbre de sortie partiel (4a, 4b) sont reliés l'un à l'autre de manière solidaire en rotation.

7. Boîte de vitesses à double embrayage selon l'une quelconque des revendications précédentes, **caractérisée en ce que** le premier arbre d'entrée de boîte de vitesses (2) et le premier arbre de sortie partiel (4a) ou la région de rapports de vitesse correspondante des arbres respectifs sont disposés sensiblement en regard.

8. Boîte de vitesses à double embrayage selon l'une quelconque des revendications précédentes, **caractérisée en ce que** le deuxième arbre d'entrée de boîte de vitesses (3) et le deuxième arbre de sortie partiel (4b) ou la région de rapports de vitesse correspondante des arbres respectifs sont disposés sensiblement en regard.

9. Boîte de vitesses à double embrayage selon l'une quelconque des revendications précédentes, **caractérisée en ce que** le deuxième arbre d'entrée de boîte de vitesses s'étendant à travers l'élément de réception est formé par deux arbres partiels, ces arbres partiels étant reliés l'un à l'autre de manière solidaire en rotation, l'extrémité respective, tournée vers l'élément de réception (5), du premier arbre d'entrée de boîte de vitesses (2) et de l'un des arbres partiels du deuxième arbre d'entrée de boîte de vitesses, ainsi que l'extrémité respective, tournée vers l'élément de réception (5), du premier et du deuxième arbre de sortie partiel (4a, 4b) étant montées sensiblement à l'intérieur de l'élément de réception (5).

10. Boîte de vitesses à double embrayage selon l'une quelconque des revendications précédentes, **caractérisée en ce que** les soupapes hydrauliques haute pression (11) servant à commander les actionneurs (6) sont disposées sur l'élément de réception (5).

11. Boîte de vitesses à double embrayage selon l'une quelconque des revendications précédentes, **caractérisée en ce que** les actionneurs (6) actionnant les tiges de changement de vitesses (12) sont disposés sur et/ou dans l'élément de réception (5) .

12. Boîte de vitesses à double embrayage selon l'une quelconque des revendications précédentes, **caractérisée en ce que** les conduites hydrauliques (8) prévues entre les soupapes haute pression (11) et les actionneurs (6) sont formées sensiblement entièrement à l'intérieur de l'élément de réception (5) .

13. Boîte de vitesses à double embrayage selon l'une quelconque des revendications précédentes, **caractérisée en ce qu'**au moins un actionneur (6) comprend un premier et un deuxième élément piston (14, 15) guidés dans le boîtier d'actionneur (6a).

14. Boîte de vitesses à double embrayage selon l'une quelconque des revendications précédentes, **caractérisée en ce que** le boîtier d'actionneur (6a) comprend un épaulement (16) intérieur prévu entre les éléments pistons (14, 15) et limitant le déplacement des éléments pistons (14, 15) respectifs dans un sens respectif.

15. Boîte de vitesses à double embrayage selon l'une quelconque des revendications précédentes, **caractérisée en ce que** la tige de changement de vitesses (12) est déplaçable dans un sens défini respectif au moyen du premier et du deuxième élément piston (14, 15).

16. Boîte de vitesses à double embrayage selon l'une quelconque des revendications précédentes, **caractérisée en ce qu'**un élément de fermeture (17) est prévu sur la tige de changement de vitesses (12) en tant que composant séparé ou intégré, lequel élément de fermeture est en contact avec les surfaces périphériques du premier et du deuxième élément piston (14, 15) pour un guidage correspondant.

17. Boîte de vitesses à double embrayage selon l'une quelconque des revendications précédentes, **caractérisée en ce que** l'élément de fermeture (17) comprend un prolongement (18) faisant saillie vers l'extérieur, de telle sorte qu'au moins temporairement, une surface d'extrémité, tournée vers l'épaulement (16), des deux éléments pistons (14, 15) puisse être amenée en contact avec le prolongement (18).

18. Boîte de vitesses à double embrayage selon l'une quelconque des revendications précédentes, **caractérisée en ce que** des chambres de pression (D1, D2) sont prévues pour solliciter respectivement l'une des surfaces d'extrémité des éléments pistons (14, 15).

19. Boîte de vitesses à double embrayage selon l'une quelconque des revendications précédentes, **caractérisée en ce que** les chambres de pression (D1, D2) sont en liaison fluidique avec des conduites hydrauliques (8).

20. Boîte de vitesses à double embrayage selon l'une quelconque des revendications précédentes, **caractérisée en ce que** les surfaces d'extrémité, tournées vers les deux chambres de pression (D1, D2), des deux éléments pistons (14, 15) et/ou les surfaces d'extrémité, tournées vers les chambres de pression (D1, D2), de l'élément de fermeture (17) sont dimensionnés et/ou formées de telle sorte que, lors d'une sollicitation en pression des chambres de pression (D1, D2) avec la même pression ou une pression similaire, les deux éléments pistons (14, 15) peuvent être amenés à une position à centrage automatique.
